Europäisches Patentamt

European Patent Office

Office européen des brevets

(19)

(11) EP 0 926 531 A1

(12) ## DEMANDE DE BREVET EUROPEEN

(43) Date de publication:
30.06.1999 Bulletin 1999/26

(51) Int. Cl.6: **G02C 7/04**

(21) Numéro de dépôt: 98403139.3

(22) Date de dépôt: 14.12.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 16.12.1997 FR 9715927

(71) Demandeur:
ESSILOR INTERNATIONAL
Compagnie Générale d'Optique
F-94220 Charenton le Pont (FR)

(72) Inventeurs:
• Baude, Dominique
93400 St. Ouen (FR)
• Chateau, Nicolas
75013 Paris (FR)

(74) Mandataire:
CABINET BONNET-THIRION
12, Avenue de la Grande-Armée
75017 Paris (FR)

(54) **Lentilles ophtalmiques multifocales à aberration sphérique variable suivant l'addition et l'amétropie**

(57) Il s'agit d'une lentille ophtalmique multifocale. Le profil de puissance (P) de la lentille en fonction de la hauteur (h) sur l'axe (A) de la lentille et de l'addition (Add) correspondant au degré de presbytie du porteur, est défini par une relation de la forme :

$$P(h) = f(P_{VL}, Add, h) + C(Add, P_{VL})h^2 + B(Add, P_{VL})$$

dans laquelle $P_{VL}$ est la puissance nécessaire pour la vision de loin, f une fonction d'évolution entre les puissances de vision de prés et de loin, $C(Add, P_{VL})$ un coefficient de correction d'aberration sphérique dépendant de l'addition et de la puissance en vision de loin, $B(Add, P_{VL})$ un coefficient de correction de puissance dépendant du coefficient d'aberration sphérique.

FIG. 1

EP 0 926 531 A1

## Description

L'invention concerne une lentille de contact à correction d'aberration sphérique pour presbytes.

De façon générale, l'aberration sphérique d'une lentille (qu'il s'agisse de l'oeil humain ou d'une lentille de contact posée sur la cornée), se caractérise en ce que la position du point d'intersection du rayon émergent et de l'axe optique de la lentille dépend de la hauteur h à laquelle le rayon incident traverse ladite lentille. On obtient alors sur la rétine une tâche au lieu d'un point image. De ce fait, la discrimination par le porteur de deux points situés à grande distance est réduite. La performance visuelle en est diminuée, ce qui cause une gène visuelle.

En ce qui concerne l'aberration sphérique de l'oeil humain, mise en évidence dans des études physiologiques, elle évolue avec l'âge, en devenant de plus en plus importante.

Le brevet US 3 778 937 (« Method [or making aspheric surfaces », Neefe, 1 nov 1971), présente un procédé d'abrasion sélective d'une partie de la face externe d'une lentille de contact unifocale, de façon à lui procurer une surface asphérique permettant de corriger ainsi l'aberration sphérique de l'oeil.

Le brevet US 4 584 484 (« Production of Soft lenses having reduced spherical aberrations », Neefe 26 nov 1984), du même inventeur, divulgue un procédé de fabrication caractérisé en la réalisation de lentilles unifocales dont la face externe est initialement une calotte sphérique, et dont la face interne est conformée de façon à avoir un rayon de courbure progressivement plus petit à mesure que l'on s'approche du bord de la lentille. Une fois la lentille mise en place sur l'oeil, sa face interne épouse le contour sphérique de la cornée, et présente donc un rayon de courbure de la face externe progressivement plus grand vers le bord de la lentille, ce qui permet une correction d'aberration sphérique.

Dans le cas particulier des personnes presbytes, des corrections différentes pour des zones concentriques situées dans l'ouverture pupillaire sont nécessaires. Des lentilles bifocales ou multifocales, présentant plusieurs plages de correction distinctes, sont classiquement connues pour la correction de la presbytie. Elles présentent en général une discontinuité de puissance entre les zones de correction différentes correspondant à la vision de près et de loin.

La demande FR 89 01417 ("Lentille optique à vision simultanée pour la correction de la presbytie", Essilor, 3 fev 1989) publiée sous le numéro 2 642 854, décrit une lentille optique à vision simultanée progressive, qui, destinée à la correction de la presbytie, se trouve définie par la courbe représentative de sa puissance, en fonction de la hauteur par rapport à l'axe. Cette courbe s'inscrit dans une zone comprise entre une courbe enveloppe inférieure et une courbe enveloppe supérieure, qui, répondant à des équations polynomiales déterminées à cet effet, permettent d'y définir deux zones de visions distinctes, l'une correspondant à la vision de loin, l'autre correspondant à la vision de près, avec, en pratique, en continu entre celles-ci, une ou plusieurs zones de vision intermédiaire.

Il est entendu que l'homme de l'art est en mesure, à partir d'une telle équation polynomiale, de déterminer les surfaces à donner aux faces interne et externe de cette lentille optique, pour qu'elle satisfasse aux conditions de puissance correspondantes.

Comme précisé dans ce brevet français auquel on peut se reporter, le terme de puissance sagittale est utilisé pour désigner l'inverse, en dioptries, de la distance en mètres, mesurée à compter du plan principal de la lentille optique, à laquelle un rayon quelconque lumineux parallèle à l'axe optique de la lentille, et situé par exemple à une hauteur h au dessus de celui-ci, recoupe cet axe après avoir traversé la lentille optique.

La lentille destinée au presbyte comporte alors deux plages principales, dont l'une correspond à la vision de près et l'autre à la vision de loin, les zones étant concentriques et reliées par une zone d'évolution continue. En pratique, la puissance en vision de près se déduit de la puissance en vision de loin par l'ajout d'une "addition" déterminée, caractéristique de la presbytie à corriger.

Dans le brevet français 93 01831, publié sous le numéro 2 701 770 ("Lentille ophtalmique à vision simultanée pour la correction de la presbytie et jeux de deux telles lentilles ophtalmiques pour un même porteur', Essilor, 18 fév 1993), des dispositions particulières sont prévues pour privilégier une des zones de vision de loin et de près par rapport à l'autre, sur la base de lentilles du genre dont la courbe de puissance est comprise entre deux enveloppes polynomiales.

Dans le cas particulier de faible presbytie, caractérisé par une valeur faible de l'addition (inférieure à 1,5 dioptrie), le brevet français 95 09016 ("Lentille optique à vision simultanée progressive pour la correction d'une presbytie correspondant à une faible addition", Essilor, 25 juil 1995) propose une lentille, du genre dont la courbe de puissance est comprise entre deux enveloppes de type polynomial, et dont la zone intermédiaire entre les zones de vision de près et de loin est ici telle que la zone de vision de près est relativement étendue en comparaison des lentilles à forte addition.

Le problème de la correction d'aberration sphérique, abordé plus haut, se pose naturellement de façon plus aiguë pour les personnes presbytes ou portant des lentilles à forte puissance de correction.

L'article de T.C.A. Jenkins, "Aberrations of the eye and their effects on vision", paru dans la revue British Journal of Physiological Optics 20 p. 59-91, 1963, montre que l'aberration sphérique de l'oeil varie avec l'âge.

La demande PCT WO 94/23327 ("Contact lens designed to accomodate and correct for the effects of presbyopia", Pilkington 22 mar 1994) présente un type de lentilles pour presbytes comportant deux zones concentriques, dont la zone centrale, de vision « directe », est corrigée pour les aberrations sphériques par une forme interne parabolique ou hyperbolique (avant mise en place sur l'oeil), et dont la zone périphérique, de correction différente de la zone centrale et correspondant à la vision « indirecte », est de surface sphérique.

L'invention vise une lentille ophtalmique multifocale progressive, dont le design tient compte de l'évolution de l'aberration sphérique oculaire avec l'âge et de sa relation avec l'amétropie.

L'invention propose à cet effet une lentille ophtalmique multifocale, caractérisée en ce que le profil de puissance sagittale (P) de la lentille en fonction de la hauteur (h) sur l'axe (A) de la lentille et de l'addition (Add) correspondant au degré de presbytie du porteur, est défini par une relation de la forme :

$$P(h) = f(P_{VL}, Add, h) + C(Add, P_{VL})h^2 + B(Add, P_{VL})$$

dans laquelle $P_{VL}$ est la puissance nécessaire pour la vision de loin, f une fonction d'évolution entre les puissances de vision de près et de loin, $C(Add, P_{VL})$ un coefficient de correction d'aberration sphérique dépendant de l'addition et de la puissance en vision de loin, $B(Add, P_{VL})$ un coefficient de correction de puissance dépendant du coefficient d'aberration sphérique.

Dans un premier cas, la fonction f d'évolution entre la vision de près et la vision de loin est comprise entre deux courbes enveloppes inférieure et supérieure, de forme polynomiale :

$$fmin(P_{VL}, Add, h) = \sum_{i=0}^{9} A'_{2i} h^{2i} + P_{VL}$$

$$fmax(P_{VL}, Add, h) = \sum_{i=0}^{9} A''_{2i} h^{2i} + P_{VL}$$

dans lesquelles les coefficients $A'_{2i}$ et $A''_{2i}$ sont caractéristiques du profil d'évolution de puissance de la lentille et dépendent de l'addition Add.

Préférentiellement, la fonction f d'évolution entre la vision de près et la vision de loin est de forme polynomiale :

$$f(P_{VL}, Add, h) = \sum_{i=0}^{9} A_{2i} h^{2i} + P_{VL}$$

dans laquelle les coefficients $A_{2i}$ sont caractéristiques du profil d'évolution de puissance de la lentille et dépendent de l'addition Add.

L'invention vise particulièrement certaines familles de lentilles, définies par des jeux de coefficients $A_{2i}$, ou $A'_{2i}$ et $A''_{2i}$ selon l'addition de la lentille. Il s'agit soit de lentilles à vision progressive du genre défini dans les brevets français 89 01417 ou 95 09016 (pour les additions faibles), soit de lentilles à vision progressive renforcée pour la vision de près ou pour la vision de loin (du genre de celles définies dans le brevet français 93 01831), avec des coefficients $A_{2i}$, ou $A'_{2i}$ et $A''_{2i}$ différents de ceux des brevets cités.

Dans un second cas, la fonction f d'évolution entre la vision de près et la vision de loin est de forme discontinue avec au moins deux segments en fonction de h :

$$f(P_{VL}, Add, h) = P_{VL} + Add \text{ pour } h \leq R$$

$$et f(P_{VL}, Add, h) = P_{VL} \text{ pour } h > R$$

où R est un rayon de zone interne de la lentille, fonction de l'addition.

L'invention vise en particulier une famille de telles lentilles, définie par une fonction particulière d'évolution du rayon de la zone de vision de loin selon l'addition de la lentille.

Avantageusement, le coefficient C de correction d'aberration sphérique est compris dans une zone définie par les courbes inférieure et supérieure suivantes:

$$Cmin(Add, P_{VL}) = -0,098 \, Add + 0,02 \, P_{VL} = 0,15$$

$$Cmax(Add, P_{VL}) = -0,0047 \, Add + 0,02 \, P_{VL} - 0,0065$$

avec $P_{VL}$ compris entre -20 et +20 dioptries, et Add entre 0,50 et 4 dioptries, C étant exprimé en dioptries / mm². 

Préférentiellement, le coefficient C est défini sensiblement par l'équation suivante :

$$C(Add, P_{VL}) = -0,051 \, Add + 0,02 \, P_{VL} - 0,077$$

Préférentiellement, le coefficient de correction de puissance (B), défini en dioptries, s'exprime en fonction du coefficient de correction d'aberration sphérique (C) sensiblement selon la formule suivante :
Quand $C \neq 0$,

$$B(Add, P_{VL}) = -0,46 \cdot \frac{C(Add, P_{VL})}{\left| C(Add, P_{VL}) \right|} \left[ \, 1 - exp(-13,1. \left| C(Add, P_{VL}) \right|) \right]$$

Quand $C = 0$, $B(Add, P_{VL}) = 0$.

La description et le dessin d'un mode préféré de réalisation de l'invention, donnés ci-après, permettront de mieux comprendre les buts et avantages de l'invention. Il est clair que cette description est donnée à titre d'exemple, et n'a pas de caractère limitatif. Dans les dessins

- la figure 1 est une vue partielle, en coupe axiale, d'une lentille optique ;
- la figure 2 montre un exemple de diagramme classique de la puissance d'une lentille optique multifocale progressive sans correction d'aberration sphérique, pour une addition de 2 dioptries ;
- la figure 3 montre le rayon optimal de la zone de vision de près en fonction de l'addition, pour une lentille bifocale ;
- la figure 4 montre la courbe représentant la valeur du coefficient de correction de puissance, en fonction du coefficient de correction d'aberration sphérique ;
- les figures 5 à 9 montrent les enveloppes inférieures et supérieures de profils, ainsi que les profils nominaux, de la puissance d'une lentille optique multifocale progressive avec correction d'aberration sphérique, dans le cas de puissance de vision de loin de -5 dioptries et de 0 dioptrie, pour des additions valant respectivement 1, 1.5, 2, 2.5, 3 dioptries,

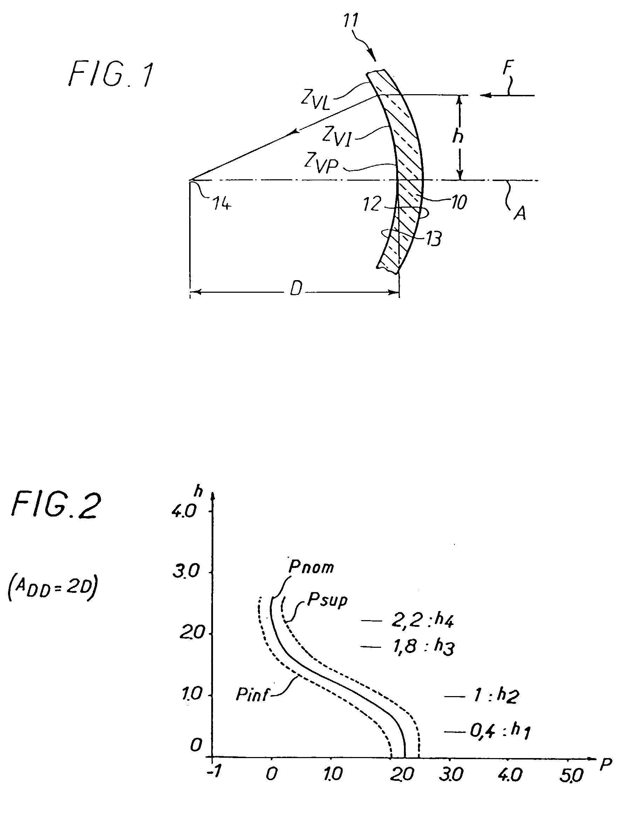

La figure 1 représente, en coupe, une lentille ophtalmique 11 pour presbytes. La zone centrale 10 correspond à la zone optique utile de la lentille, qui s'étend généralement sur un disque de rayon compris entre 2 et 3mm. La zone utile est naturellement limitée par la taille de la pupille, la zone externe de la lentille servant à faciliter le positionnement sur l'oeil mais n'ayant pas de fonction de création d'image, puisque les rayons lumineux qui traversent cette zone n'atteignent pas la rétine. Préférentiellement, le profil de puissance de la lentille de l'invention est défini pour h compris entre 0,5 et 3mm.

Si on considère l'axe A de la lentille, un rayon lumineux F parallèle à cet axe et traversant la lentille à une hauteur h au dessus de l'axe, est dévié vers cet axe et vient le couper en un point 14 à une distance D après traversée de la lentille.

La puissance sagittale de la lentille est définie par l'inverse de cette distance, exprimée en mètres. Lorsque les rayons ne concourent pas au même point 14, selon leur hauteur incidente h, la puissance dépend de cette hauteur.

Dans une lentille multifocale progressive, le profil de puissance nominal $P_{NOM.}$ présenté en fonction de la hauteur h à l'axe A, est une courbe continue, telle qu'on peut en voir à titre d'exemple sur la figure 2.

Comme on l'a vu, dans les demandes de brevet français 89 01417, 93 01831 et 95 09016, le profil de puissance de la lentille est en fait défini par deux courbes enveloppes $P_{INF.}$ et $P_{SUP.}$ représentant les courbes inférieure et supérieure entre lesquelles le profil doit se trouver pour être considéré comme conforme aux spécifications correspondant au porteur.

Dans une famille particulière de lentilles multifocales progressives, la fonction d'évolution nominale entre la vision de près et la vision de loin f est de forme polynomiale :

$$f(P_{VL}, Add, h) = \sum_{i=0}^{9} A_{2i} H^{2i} + P_{VL}$$

dans laquelle les coefficients $A_{2i}$ sont caractéristiques du profil d'évolution de puissance de la lentille. Les deux courbes enveloppes inférieure et supérieure, sont également de forme polynomiale :

$$f_{min}(P_{VL}, Add, h) = \sum_{i=0}^{9} A'_{2i} h^{2i} + P_{VL}$$

$$f_{max}(P_{VL}, Add, h) = \sum_{i=0}^{9} A''_{2i} h^{2i} + P_{VL}$$

dans lesquelles les coefficients $A'_{2i}$ et $A''_{2i}$ sont caractéristiques du profil d'évolution de puissance de la lentille.

Dans les tableaux T1 à T3 sont indiqués les coefficients correspondant à des familles de lentilles particulières, soit pour des corrections classiques, soit pour des lentilles d'addition faible, soit pour des lentilles à vision de près renforcée ou à vision de loin renforcée. Les coefficients sont donnés pour des puissances en dioptries et des hauteurs en mm.

Il est clair que les valeurs correspondant à des additions intermédiaires ou au delà de ces valeurs sont obtenues par interpolation ou extrapolation des ces courbes.

Dans une lentille bifocale, le profil de puissance est discontinu, avec deux zones distinctes telles que le rayon (R) de la limite entre les zones dépend de l'addition de la lentille. La fonction f d'évolution entre la vision de près et la vision de loin est de forme discontinue avec au moins deux segments en fonction de h :

$$f(P_{VL}, Add, h) = P_{VL} + Add \text{ pour } h \leq R$$

$$\text{et } f(P_{VL}, Add, h) = P_{VL} \text{ pour } h > R$$

où R est un rayon de zone interne de la lentille, fonction de l'addition.

Préférentiellement, le rayon R, exprimé en mm, a sensiblement les valeurs suivantes en fonction de l'addition (Add) exprimée en dioptries :

pour Add = 0,5      R = 1, 39
pour Add = 0,75     R = 1, 35
pour Add = 1        R = 1, 32
pour Add = 1,25     R = 1, 29
pour Add = 1,5      R = 1, 27
pour Add = 1,75     R = 1, 245
pour Add = 2        R = 1, 225
pour Add = 2,25     R = 1, 2
pour Add = 2,5      R = 1, 17
pour Add = 2,75     R = 1, 12
pour Add = 3        R = 1, 06

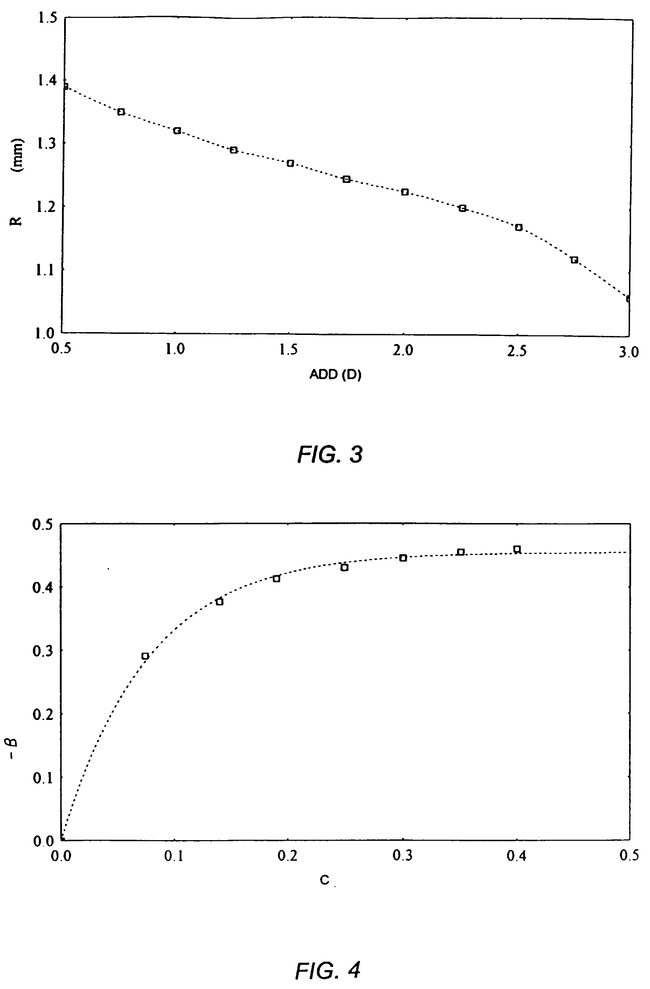

(avantageusement, R sera compris dans un intervalle de ± 0,15 mm autour des valeurs nominales indiquées), et pour les autres valeurs de l'addition (Add), le rayon R est obtenu par interpolation ou extrapolation. La figure 3 montre la courbe représentant le rayon R en fonction de l'addition Add de la lentille.

Le profil de puissance de la lentille de l'invention est obtenu en ajoutant au profil de puissance (P) de la lentille, telle que définie plus haut pour les diverses familles de lentilles considérées, un terme d'aberration sphérique du troisième ordre : $C(Add, P_{VL})h^2$.

Les variations du coefficient C en fonction de l'addition Add et de la puissance $P_{VL}$ en vision de loin, sont définies par une courbe optimale, ainsi que par des courbes enveloppes traduisant les tolérances supérieures et inférieures de valeurs du coefficient. La courbe optimale est définie par l'équation suivante :

$$C(Add, P_{VL}) = -0{,}051\ Add + 0{,}02\ P_{VL} - 0{,}077$$

et les courbes enveloppes par les deux équations :

$$Cmin(Add, P_{VL}) = -0{,}098\ Add + 0{,}02\ P_{VL} - 0{,}15$$

$$Cmax(Add, P_{VL}) = -0{,}0047\ Add + 0{,}02\ P_{VL} - 0{,}0065$$

avec Add et $P_{VL}$ en dioptries, et C en dioptries / mm$^2$.

Ces équations sont valables pour des valeurs de la puissance en vision de loin $P_{VL}$ comprises entre -20 et +20 dioptries, et de l'addition Add entre 0,50 et 4 dioptries.

Du fait de l'ajout du coefficient de correction C d'aberration sphérique, la puissance effective de la lentille en vision de loin a été modifiée légèrement, et vaut alors $P_{VL} + \Delta P$. Afin de retrouver la valeur initiale de la puissance, pour ce profil, il est nécessaire d'ajouter un terme de correction de puissance B, qui dépend de l'addition et de la puissance, par l'intermédiaire du coefficient $C(Add, P_{VL})$.

Le coefficient de correction de puissance, défini en dioptries, s'exprime alors de la façon suivante :
Quand $C \neq 0$,

$$B(Add, P_{VL}) = -0{,}46 \cdot \frac{C(Add, P_{VL})}{\left| C(Add, P_{VL}) \right|} \left[ 1 - \exp(-13{,}1 \cdot \left| C(Add, P_{VL}) \right|) \right]$$

Quand $C = 0$, $B(Add, P_{VL}) = 0$.

Il est évident qu'une expression directement en fonction de Add et $P_{VL}$ est déductible de cette formule, en remplaçant de coefficient d'aberration sphérique $C(Add, P_{VL})$ par son expression en fonction de l'addition Add et de la puissance en vision de loin $P_{VL}$.

La figure 4 montre la courbe correspondant à cette équation, avec le coefficient de correction d'aberration sphérique C en abscisse, et le coefficient B de correction de puissance en ordonnée.

On obtient donc finalement pour le profil de puissance de la lentille une équation de la forme suivante :

$$P(h) = f(P_{VL}, Add, h) + C(Add, P_{VL})h^2 + B(Add, P_{VL})$$

Il est entendu qu'un homme de l'art est en mesure, à partir de la courbe de profil de puissance en fonction de la hauteur sur l'axe, de déterminer les formes à donner aux faces avant 12 et arrières 13 de la lentille.

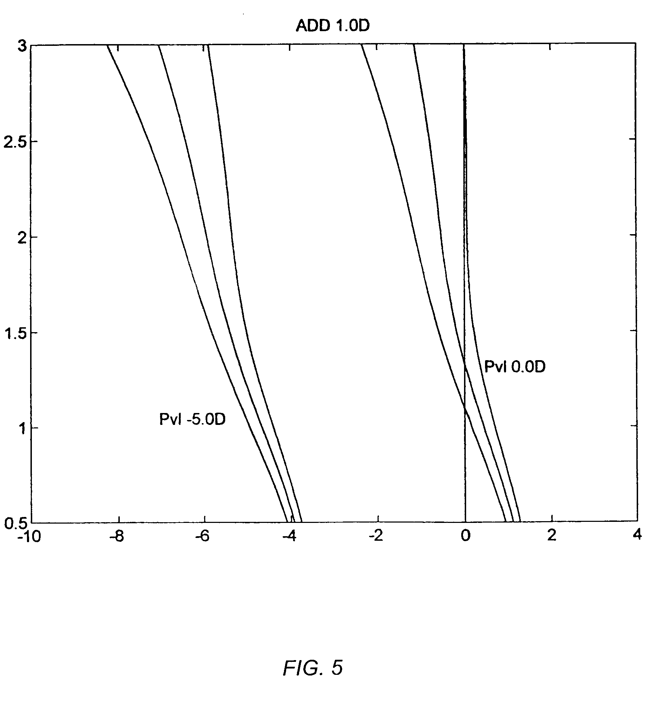

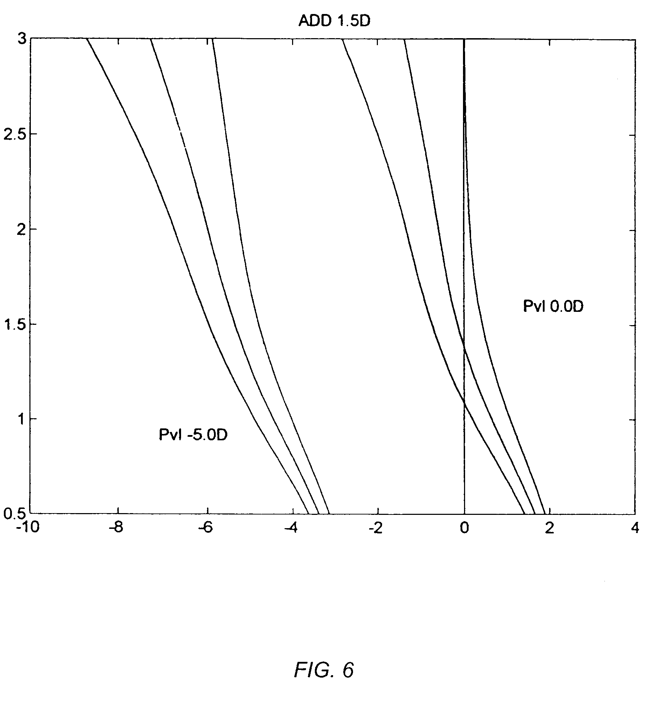

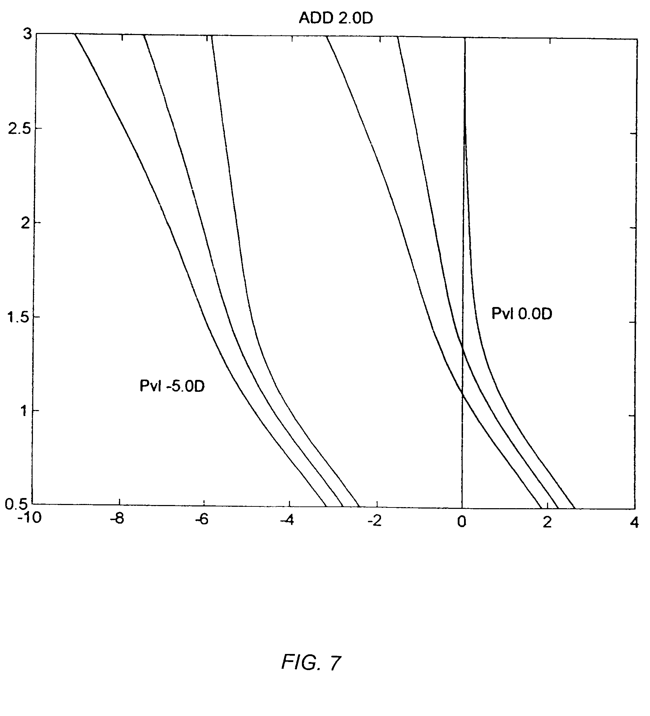

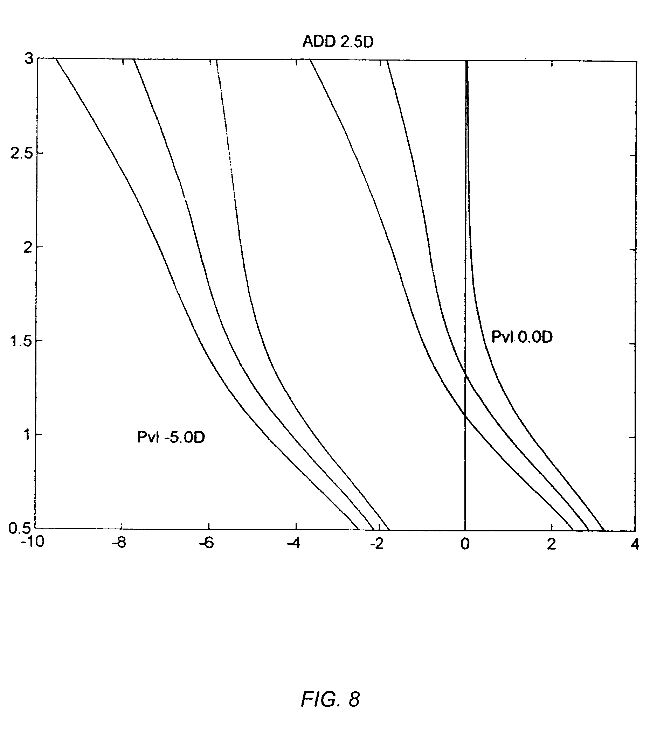

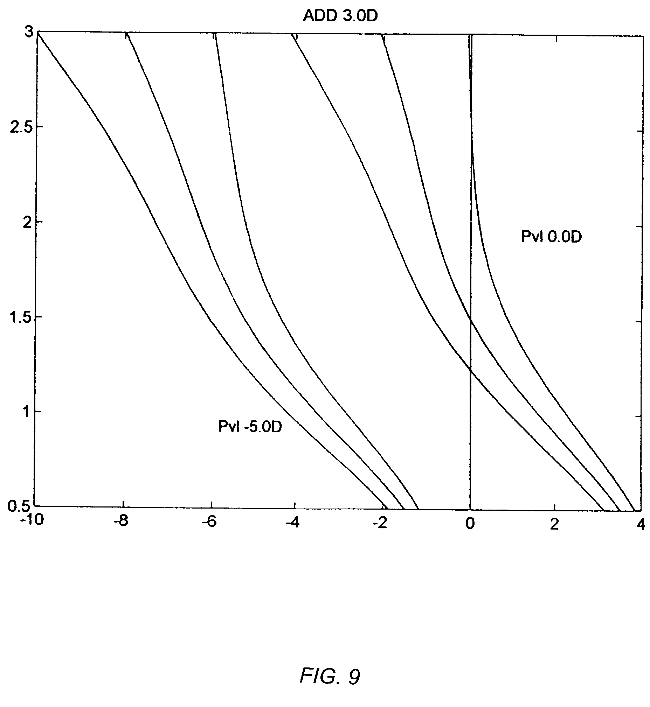

Sur les figures 5 à 9 sont représentées les enveloppes inférieure et supérieure de profils, ainsi que les profils nominaux, de la puissance d'une lentille ophtalmique multifocale progressive avec correction d'aberration sphérique (comportant donc les termes correctifs décrits plus haut), dans le cas de puissance de vision de loin de -5 dioptries et de 0 dioptrie, pour des additions valant respectivement 1, 1.5, 2, 2.5, 3 dioptries.

La portée de la présente invention ne se limite pas aux détails des formes de réalisation ci-dessus considérées à titre d'exemple, mais s'étend au contraire aux modifications à la portée de l'homme de l'art. Il est clair par exemple que la lentille de l'invention peut tout aussi bien être un implant intra-oculaire ou une lentille intra-cornéenne qu'une lentille de contact.

**Add = 1D**

| A'0 | 1,26386 | A"0 | 1,52644 | A0 | 1,40165 |
|---|---|---|---|---|---|
| A'2 | -1,18598 | A"2 | -1,09482 | A2 | -1,13539 |
| A'4 | 0,378518 | A"4 | 0,30171 | A4 | 0,337241 |
| A'6 | -5,42691 E-02 | A"6 | -2,93378 E-02 | A6 | -0,0427423 |
| A'8 | 2,33828 E-03 | A"8 | -2,07609 E-03 | A8 | 8,29968 E-04 |
| A'10 | 3,15445 E-04 | A"10 | 7,8769 E-04 | A10 | 4,04834 E-04 |
| A'12 | -5,07438 E-05 | A"12 | -8,21244 E-05 | A12 | -5,12825 E-05 |
| A'14 | 3,0475 E-06 | A"14 | 4,31529 E-06 | A14 | 2,83764 E-06 |
| A'16 | -8,76962 E-08 | A"16 | -1,16223 E-07 | A16 | -7,76449 E-08 |
| A'18 | 1,00265 E-09 | A"18 | 1,27688 E-09 | A18 | 8,54866 E-10 |

**Add = 1,5D**

| A'0 | 2,00339 | A"0 | 2,27713 | A0 | 2,14261 |
|---|---|---|---|---|---|
| A'2 | -2,31133 | A"2 | -1,66479 | A2 | -1,99105 |
| A'4 | 1,01658 | A"4 | 0,587462 | A4 | 0,820412 |
| A'6 | -0,240056 | A"6 | -0,121375 | A6 | -0,194111 |
| A'8 | 0,0337422 | A"8 | 0,0159218 | A8 | 0,0288185 |
| A'10 | -2,94537 E-03 | A"10 | -1,35879 E-03 | A10 | -0,00277165 |
| A'12 | 1,60394 E-04 | A"12 | 7,49086 E-05 | A12 | 1,72369 E-04 |
| A'14 | -5,26619 E-06 | A"14 | -2,56358 E-06 | A14 | -6,68299 E-06 |
| A'16 | 9,45037 E-08 | A"16 | 4,93594 E-08 | A16 | 1,46703 E-07 |
| A'18 | -7,02035 E-10 | A"18 | -4,07302 E-10 | A18 | -1,39113 E-09 |

**Add = 2 D**

| A'0 | 2,70216 | A"0 | 3,44464 | A0 | 3,04879 |
|---|---|---|---|---|---|
| A'2 | -3,40589 | A"2 | -3,6967 | A2 | -3,4244 |
| A'4 | 1,78475 | A"4 | 1,84759 | A4 | 1,71421 |
| A'6 | -0,519481 | A"6 | -0,518458 | A6 | -0,485038 |
| A'8 | 0,091493 | A"8 | 0,0885806 | A8 | 0,084004 |
| A'10 | -0,0100987 | A"10 | -9,53119 E-03 | A10 | -0,00918407 |
| A'12 | 7,01081 E-04 | A"12 | 6,4772 E-04 | A12 | 6,3438 E-04 |
| A'14 | -2,96764 E-05 | A"14 | -2,69337 E-05 | A14 | -2,67926 E-05 |
| A'16 | 6,98897 E-07 | A"16 | 6,24925 E-07 | A16 | 6,30643 E-07 |
| A'18 | -7,01343 E-09 | A"18 | -6,19319 E-09 | A18 | -6,33178 E-09 |

**Add = 2,5 D**

| A'0 | 3,65783 | A"0 | 4,15706 | A0 | 3,84715 |
|---|---|---|---|---|---|
| A'2 | -4,66652 | A"2 | -3,96025 | A2 | -3,95474 |
| A'4 | 2,37082 | A"4 | 1,76854 | A4 | 1,64138 |
| A'6 | -0,658545 | A"6 | -0,460714 | A6 | -0,363149 |
| A'8 | 0,110848 | A"8 | 0,0760187 | A8 | 0,0473992 |
| A'10 | -0,0117773 | A"10 | -0,00812867 | A10 | -0,00378685 |
| A'12 | 7,93256 E-04 | A"12 | 5,586 E-04 | A12 | 1,84073 E-04 |
| A'14 | -3,28028 E-05 | A"14 | -2,37071 E-05 | A14 | -5,15076 E-06 |
| A'16 | 7,58865 E-07 | A"16 | 5,63779 E-07 | A16 | 7,14489 E-08 |
| A'18 | -7,5126 E-09 | A"18 | -5,73387 E-09 | A18 | -3,10284 E-10 |

**Add = 3 D**

| A'0 | 4,18598 | A"0 | 4,55351 | A0 | 4,36815 |
|---|---|---|---|---|---|
| A'2 | -4,08044 | A"2 | -2,98119 | A2 | -3,4584 |
| A'4 | 1,58434 | A"4 | 0,66432 | A4 | 1,1305 |
| A'6 | -0,326707 | A"6 | -0,138653 | A6 | -0,19309 |
| A'8 | 0,0389326 | A"8 | 0,0130732 | A8 | 0,0177447 |
| A'10 | -0,00270978 | A"10 | -6,93297 E-04 | A10 | -7,20108 E-04 |
| A'12 | 1,02597 E-04 | A"12 | 1,52301 E-05 | A12 | -1,08962 E-05 |
| A'14 | -1,49759 E-06 | A"14 | 2,83552 E-07 | A14 | 2,33913 E-06 |
| A'16 | -1,82264 E-08 | A"16 | -2,196 E-08 | A16 | -8,82046 E-08 |
| A'18 | 6,18332 E-10 | A"18 | 3,32106 E-10 | A18 | 1,14025 E-09 |

TABLEAU 1

**Add = 1D**

| | | | | | |
|---|---|---|---|---|---|
| A'0 | 1,14955 | A"0 | 1,79188 | A0 | 1,3988 |
| A'2 | -2,17834 | A"2 | -2,14906 | A2 | -2,16002 |
| A'4 | 1,44086 | A"4 | 1,26337 | A4 | 1,33772 |
| A'6 | -0,488471 | A"6 | -0,40226 | A6 | -0,432789 |
| A'8 | 0,0952055 | A"8 | 0,0752613 | A8 | 0,0815423 |
| A'10 | -0,0112687 | A"10 | -0,00864155 | A10 | -0,00941029 |
| A'12 | 0,00082252 | A"12 | 0,00061569 | A12 | 6,73638 E-04 |
| A'14 | -3,61421 E-05 | A"14 | -2,65189 E-05 | A14 | -2,91496 E-05 |
| A'16 | 8,76009 E-07 | A"16 | 6,32021 E-07 | A16 | 6,97847 E-07 |
| A'18 | -8,99323 E-09 | A"18 | -6,39553 E-09 | A18 | -7,09193 E-09 |

**Add = 1,5D**

| | | | | | |
|---|---|---|---|---|---|
| A'0 | 1,93369 | A"0 | 2,59533 | A0 | 2,23308 |
| A'2 | -3,67534 | A"2 | -3,36181 | A2 | -3,5289 |
| A'4 | 2,52397 | A"4 | 2,00313 | A4 | 2,21463 |
| A'6 | -0,881948 | A"6 | -0,647982 | A6 | -0,724956 |
| A'8 | 0,176071 | A"8 | 0,123858 | A8 | 0,138094 |
| A'10 | -0,021241 | A"10 | -0,0145608 | A10 | -0,0160961 |
| A'12 | 0,00157429 | A"12 | 0,00106184 | A12 | 1,1625 E-03 |
| A'14 | -7,0039 E-05 | A"14 | -4,67412 E-05 | A14 | -5,06976 E-05 |
| A'16 | 1,71503 E-06 | A"16 | 1,13627 E-06 | A16 | 1,22204 E-06 |
| A'18 | -1,77574 E-08 | A"18 | -1,17047 E-08 | A18 | -1,24938 E-08 |

**Add = 2 D**

| | | | | | |
|---|---|---|---|---|---|
| A'0 | 2,71988 | A"0 | 3,39246 | A0 | 3,09333 |
| A'2 | -4,97264 | A"2 | -4,33763 | A2 | -4,75114 |
| A'4 | 3,29933 | A"4 | 2,42641 | A4 | 2,91364 |
| A'6 | -1,11911 | A"6 | -0,724383 | A6 | -0,937834 |
| A'8 | 2,18396 E-01 | A"8 | 1,27534 E-01 | A8 | 0,17649 |
| A'10 | -2,58999 E-02 | A"10 | -1,38799 E-02 | A10 | -0,0203899 |
| A'12 | 1,89471 E-03 | A"12 | 9,43993 E-04 | A12 | 1,46289 E-03 |
| A'14 | -8,34455 E-05 | A"14 | -3,90499 E-05 | A14 | -6,34757 E-05 |
| A'16 | 2,02699 E-06 | A"16 | 8,98394 E-07 | A16 | 1,52401 E-06 |
| A'18 | -2,0852 E-08 | A"18 | -8,81296 E-09 | A18 | -1,55319 E-08 |

**Add = 2,5 D**

| | | | | | |
|---|---|---|---|---|---|
| A'0 | 3,78586 | A"0 | 4,61931 | A0 | 4,10909 |
| A'2 | -6,68361 | A"2 | -5,52909 | A2 | -5,95027 |
| A'4 | 4,37851 | A"4 | 2,85006 | A4 | 3,46877 |
| A'6 | -1,47553 | A"6 | -7,89562 E-01 | A6 | -1,07452 |
| A'8 | 2,86712 E-01 | A"8 | 1,29997 E-01 | A8 | 0,196608 |
| A'10 | -3,38913 E-02 | A"10 | -1,33166 E-02 | A10 | -0,02225 |
| A'12 | 2,47294 E-03 | A"12 | 8,5695 E-04 | A12 | 1,57197 E-03 |
| A'14 | -1,08683 E-04 | A"14 | -3,36869 E-05 | A14 | -6,74164 E-05 |
| A'16 | 2,63544 E-06 | A"16 | 7,39168 E-07 | A16 | 1,60406 E-06 |
| A'18 | -2,70717 E-08 | A"18 | -6,93743 E-09 | A18 | -1,62318 E-08 |

**Add = 3 D**

| | | | | | |
|---|---|---|---|---|---|
| A'0 | 4,19136 | A"0 | 5,0023 | A0 | 4,60564 |
| A'2 | -6,02347 | A"2 | -4,68276 | A2 | -5,23524 |
| A'4 | 3,41786 | A"4 | 1,78942 | A4 | 2,45824 |
| A'6 | -1,03877 | A"6 | -3,4488 E-01 | A6 | -0,630152 |
| A'8 | 1,8748 E-01 | A"8 | 3,48989 E-02 | A8 | 0,0978757 |
| A'10 | -2,10043 E-02 | A"10 | -1,54767 E-03 | A10 | -0,00961613 |
| A'12 | 1,47276 E-03 | A"12 | -2,11172 E-05 | A12 | 6,01202 E-04 |
| A'14 | -6,27956 E-05 | A"14 | 5,29538 E-06 | A14 | -2,31856 E-05 |
| A'16 | 1,48733 E-06 | A"16 | -2,09482 E-07 | A16 | 5,0277 E-07 |
| A'18 | -1,4996 E-08 | A"18 | 2,80655 E-09 | A18 | -4,68902 E-09 |

*TABLEAU 2*

8

**Add = 1D**

| | | | | | |
|---|---|---|---|---|---|
| A'0 | 1,07286 | A"0 | 1,67495 | A0 | 1,25812 |
| A'2 | 0,320699 | A"2 | -0,186507 | A2 | 0,276651 |
| A'4 | -0,657171 | A"4 | -0,260694 | A4 | -0,58639 |
| A'6 | 0,255218 | A"6 | 0,109511 | A6 | 0,215821 |
| A'8 | -0,0490516 | A"8 | -0,0201114 | A8 | -0,0389064 |
| A'10 | 0,0054899 | A"10 | 0,00210789 | A10 | 4,06343 E-03 |
| A'12 | -3,74632 E-04 | A"12 | -1,3458 E-04 | A12 | -2,57889 E-04 |
| A'14 | 1,53798 E-05 | A"14 | 5,1918 E-06 | A14 | 9,82156 E-06 |
| A'16 | -3,49417 E-07 | A"16 | -1,11489 E-07 | A16 | -2,06571 E-07 |
| A'18 | 3,37795 E-09 | A"18 | 1,02479 E-09 | A18 | 1,84521 E-09 |

**Add = 1,5D**

| | | | | | |
|---|---|---|---|---|---|
| A'0 | 1,52699 | A"0 | 2,04694 | A0 | 1,75922 |
| A'2 | -0,361839 | A"2 | 0,00504386 | A2 | -0,13939 |
| A'4 | -0,526959 | A"4 | -0,72156 | A4 | -0,598726 |
| A'6 | 0,311383 | A"6 | 0,332037 | A6 | 0,295587 |
| A'8 | -0,0753019 | A"8 | -0,0712913 | A8 | -0,0653998 |
| A'10 | 0,00997776 | A"10 | 0,00875108 | A10 | 8,16835 E-03 |
| A'12 | -7,79578 E-04 | A"12 | -6,47787 E-04 | A12 | -6,11438 E-04 |
| A'14 | 3,58257 E-05 | A"14 | 2,85999 E-05 | A14 | 2,72016 E-05 |
| A'16 | -8,96048 E-07 | A"16 | -6,93668 E-07 | A16 | -6,63346 E-07 |
| A'18 | 9,41343 E-09 | A"18 | 7,11314 E-09 | A18 | 6,82951 E-09 |

**Add = 2 D**

| | | | | | |
|---|---|---|---|---|---|
| A'0 | 2,0372 | A"0 | 2,51543 | A0 | 2,27582 |
| A'2 | -0,773797 | A"2 | -0,0956491 | A2 | -0,311495 |
| A'4 | -0,35122 | A"4 | -0,814048 | A4 | -0,747841 |
| A'6 | 0,260538 | A"6 | 0,391545 | A6 | 0,398884 |
| A'8 | -0,0654291 | A"8 | -0,0867876 | A8 | -0,0920375 |
| A'10 | 0,00874569 | A"10 | 0,0109575 | A10 | 0,0118385 |
| A'12 | -6,83569 E-04 | A"12 | -8,31697 E-04 | A12 | -9,05966 E-04 |
| A'14 | 3,1335 E-05 | A"14 | 3,7539 E-05 | A14 | 4,10027 E-05 |
| A'16 | -7,81015 E-07 | A"16 | -9,28232 E-07 | A16 | -1,01365 E-06 |
| A'18 | 8,17476 E-09 | A"18 | 9,68034 E-09 | A18 | 1,0552 E-08 |

**Add = 2,5 D**

| | | | | | |
|---|---|---|---|---|---|
| A'0 | 2,49526 | A"0 | 2,99351 | A0 | 2,75097 |
| A'2 | -0,982385 | A"2 | -0,486412 | A2 | -0,470951 |
| A'4 | -0,229961 | A"4 | -0,488394 | A4 | -0,632494 |
| A'6 | 0,201655 | A"6 | 0,244189 | A6 | 0,332472 |
| A'8 | -0,0503787 | A"8 | -0,0520116 | A8 | -0,0741809 |
| A'10 | 6,62155 E-03 | A"10 | 6,29987 E-03 | A10 | 9,2779 E-03 |
| A'12 | -5,0929 E-04 | A"12 | -4,6243 E-04 | A12 | -6,94985 E-04 |
| A'14 | 2,30313 E-05 | A"14 | 2,03523 E-05 | A14 | 3,09539 E-05 |
| A'16 | -5,67689 E-07 | A"16 | -4,9403 E-07 | A16 | -7,56087 E-07 |
| A'18 | 5,88796 E-09 | A"18 | 5,08339 E-09 | A18 | 7,79979 E-09 |

**Add = 3 D**

| | | | | | |
|---|---|---|---|---|---|
| A'0 | 3,20898 | A"0 | 3,74531 | A0 | 3,4754 |
| A'2 | -1,11419 | A"2 | -0,699573 | A2 | -0,952351 |
| A'4 | -0,36958 | A"4 | -0,525259 | A4 | -0,349482 |
| A'6 | 0,268856 | A"6 | 0,269972 | A6 | 0,205687 |
| A'8 | -0,0635023 | A"8 | -0,0572078 | A8 | -0,042057 |
| A'10 | 8,02594 E-03 | A"10 | 6,86483 E-03 | A10 | 4,66255 E-03 |
| A'12 | -5,97885 E-04 | A"12 | -4,99263 E-04 | A12 | -3,07085 E-04 |
| A'14 | 2,631 E-05 | A"14 | 2,17955 E-05 | A14 | 1,20246 E-05 |
| A'16 | -6,33313 E-07 | A"16 | -5,2544 E-07 | A16 | -2,59016 E-07 |
| A'18 | 6,43355 E-09 | A"18 | 5,37576 E-09 | A18 | 2,36646 E-09 |

*TABLEAU 3*

**Revendications**

1. Lentille ophtalmique multifocale, caractérisée en ce que le profil de puissance (P), en dioptries, de la lentille en fonction de la hauteur (h), en mm, sur l'axe (A) de la lentille et de l'addition (Add), en dioptries, correspondant au degré de presbytie et d'amétropie du porteur, est défini par une relation de la forme :

$$P(h) = f(P_{VL}, Add, h) + C(Add, P_{VL})h^2 + B(Add, P_{VL})$$

dans laquelle $P_{VL}$ est la puissance en dioptries nécessaire pour la vision de loin, f une fonction d'évolution entre les puissances de vision de près et de loin, $C(Add, P_{VL})$ un coefficient de correction d'aberration sphérique, en dioptries / mm², dépendant de l'addition et de la puissance en vision de loin, $B(Add, P_{VL})$ un coeffcient de correction de puissance dépendant du coefficient en dioptries d'aberration sphérique.

2.  Lentille selon la revendication 1, caractérisée en ce que la fonction d'évolution entre la vision de près et la vision de loin, f, est comprise entre deux courbes enveloppes inférieure et supérieure, de forme polynomiale :

$$fmin(P_{VL}, Add, h) = \sum_{i=0}^{9} A'_{2i} h^{2i} + P_{VL}$$

$$fmax(P_{VL}, Add, h) = \sum_{i=0}^{9} A''_{2i} h^{2i} + P_{VL}$$

dans lesquelles les coeffcients $A'_{2i}$ et $A''_{2i}$ sont caractéristiques du profil d'évolution de puissance de la lentille.

3.  Lentille selon la revendication 2, caractérisée en ce que la fonction d'évolution entre la vision de près et la vision de loin, f, est de forme polynomiale :

$$f(P_{VL}, Add, h) = \sum_{i=0}^{9} A_{2i} h^{2i} + P_{VL}$$

dans laquelle les coefficients $A_{2i}$ sont caractéristiques du profil d'évolution de puissance de la lentille.

4.  Lentille selon la revendication 2, caractérisée en ce que les coefficients $A'_{2i}$ et $A''_{2i}$ ont les valeurs suivantes :

pour une addition de 1 dioptrie :

$A'_0 = 1,26386$        $A''_0 = 1,52644$
$A'_2 = -1,18598$       $A'' = -1,09482$
$A'_4 = 0,378518$       $A''_4 = 0,30171$
$A'_6 = -5,42691 E-02$  $A''_6 = -2,93378 E-02$
$A'_8 = 2,33828 E-03$   $A''_8 = -2,07609 E-03$
$A'_{10} = 3,15445 E-04$ $A''_{10} = 7,8769 E-04$
$A'_{12} = -5,07438 E-05$ $A''_{12} = -8,21244 E-05$
$A'_{14} = 3,0475 E-06$  $A''_{14} = 4,31529 E-06$
$A'_{16} = -8,76962 E-08$ $A''_{16} = -1,16223 E-07$
$A'_{18} = 1,00265 E-09$ $A''_{18} = 1,27688 E-09$

pour une addition de 1,5 dioptrie :

$A'_0 = 2,00339$        $A''_0 = 2,27713$
$A'_2 = -2,31133$       $A''_2 = -1,66479$
$A'_4 = 1,01658$        $A''_4 = 0,587462$
$A'_6 = -0,240056$      $A''_6 = -0,121375$

$A'_8 = 0,0337422$     $A''_8 = 0,0159218$

$A'_{10} = -2,94537 \ E\text{-}03$     $A''_{10} = -1,35879 \ E\text{-}03$

$A'_{12} = 1,60394 \ E\text{-}04$     $A''_{12} = 7,49086 \ E\text{-}05$

$A'_{14} = -5,26619 \ E\text{-}06$     $A''_{14} = -2,56358 \ E\text{-}06$

$A'_{16} = 9,45037 \ E\text{-}08$     $A''_{16} = 4,93594 \ E\text{-}08$

$A'_{18} = -7,02035 \ E\text{-}10$     $A''_{18} = -4,07302 \ E\text{-}10$

pour une addition de 2 dioptries :

$A'_0 = 2,70216$     $A''_0 = 3,44464$

$A'_2 = -3,40589$     $A''_2 = -3,6967$

$A'_4 = 1,78475$     $A''_4 = 1,84759$

$A'_6 = -0,519481$     $A''_6 = -0,518458$

$A'_8 = 0,091493$     $A''_8 = 0,0885806$

$A'_{10} = -0,0100987$     $A''_{10} = -9,53119 \ E\text{-}03$

$A'_{12} = 7,01081 \ E\text{-}04$     $A''_{12} = 6,4772 \ E\text{-}04$

$A'_{14} = -2,96784 \ E\text{-}05$     $A''_{14} = -2,69337 \ E\text{-}05$

$A'_{16} = 6,98897 \ E\text{-}07$     $A''_{16} = 6,24925 \ E\text{-}07$

$A'_{18} = -7,01343 \ E\text{-}09$     $A''_{18} = -6,19319 \ E\text{-}09$

pour une addition de 2,5 dioptries :

$A'_0 = 3,65783$     $A''_0 = 4,15706$

$A'_2 = -4,66652$     $A''_2 = -3,96025$

$A'_4 = 2,37082$     $A''_4 = 1,76854$

$A'_6 = -0,658545$     $A''_6 = -0,460714$

$A'_8 = 0,110848$     $A''_8 = 0,0760187$

$A'_{10} = -0,0117773$     $A''_{10} = -0,00812867$

$A'_{12} = 7,93256 \ E\text{-}04$     $A''_{12} = 5,588 \ E\text{-}04$

$A'_{14} = -3,28028 \ E\text{-}05$     $A''_{14} = -2,37071 \ E\text{-}05$

$A'_{16} = 7,58865 \ E\text{-}07$     $A''_{16} = 5,63779 \ E\text{-}07$

$A'_{18} = -7,5126 \ E\text{-}09$     $A''_{18} = -5,73387 \ E\text{-}09$

pour une addition de 3 dioptries :

$A'_0 = 4,18598$     $A''_0 = 4,55351$

$A'_2 = -4,08044$     $A''_2 = -2,98119$

$A'_4 = 1,58434$     $A''_4 = 0,86432$

$A'_6 = -0,326707$     $A''_6 = -0,138653$

$A'_8 = 0,0389326$     $A''_8 = 0,0130732$

$A'_{10} = -0,00270978$     $A''_{10} = -0,000693297$

$A'_{12} = 1,02597 \ E\text{-}04$     $A''_{12} = 1,52301 \ E\text{-}05$

$A'_{14} = -1,49759 \ E\text{-}06$     $A''_{14} = 2,83552 \ E\text{-}07$

$A'_{16} = -1,82264 \ E\text{-}08$     $A''_{16} = -2,196 \ E\text{-}08$

$A'_{18} = 6,18332 \ E\text{-}10$     $A''_{18} = 3,32106 \ E\text{-}10$

5. Lentille selon la revendication 3 et la revendication 4, caractérisée en ce que les coeffcients $A_{2i}$ ont les valeurs suivantes :

pour une addition de 1 dioptrie :

$A_0 = 1,40165$

$A_2 = -1,13539$

$A_4 = 0,337241$

$A_6 = -0,0427423$

$A_8 = 0,000829968$

$A_{10} = 0,000404834$

$A_{12} = -5,12825 \ E\text{-}05$

$A_{14} = 2,83764$ E-06
$A_{16} = -7,76449$ E-08
$A_{18} = 8,54866$ E-10

pour une addition de 1,5 dioptrie :

$A_0 = 2,14261$
$A_2 = -1,99105$
$A_4 = 0,820412$
$A_6 = -0,194111$
$A_8 = 0,0288185$
$A_{10} = -0,00277165$
$A_{12} = 1,72369$ E-04
$A_{14} = -6,68299$ E-06
$A_{16} = 1,46703$ E-07
$A_{18} = -1,39113$ E-09

pour une addition de 2 dioptries :

$A_0 = 3,04879$
$A_2 = -3,4244$
$A_4 = 1,71421$
$A_6 = -0,485038$
$A_8 = 0,084004$
$A_{10} = -0,00918407$
$A_{12} = 6,3438$ E-04
$A_{14} = -2,67926$ E-05
$A_{16} = 6,30643$ E-07
$A_{18} = -6,33178$ E-09

pour une addition de 2,5 dioptries :

$A_0 = 3,84715$
$A_2 = -3,95474$
$A_4 = 1,64138$
$A_6 = -0,363149$
$A_8 = 0,0473992$
$A_{10} = -0,00378685$
$A_{12} = 1,84073$ E-04
$A_{14} = -5,15076$ E-06
$A_{16} = 7,14489$ E-08
$A_{18} = -3,10284$ E-10

pour une addition de 3 dioptries :

$A_0 = 4,36815$
$A_2 = -3,4584$
$A_4 = 1,1305$
$A_6 = -0,19309$
$A_8 = 0,0177447$
$A_{10} = -7,20108$ E-04
$A_{12} = -1,08962$ E-05
$A_{14} = 2,33913$ E-06
$A_{16} = -8,82046$ E-08
$A_{18} = 1,14025$ E-09

6. Lentille selon la revendication 2, caractérisée en ce que les coeffcients $A'_{2i}$ et $A''_{2i}$ ont les valeurs suivantes :

pour une addition de 1 dioptrie :

$A'_0 = 1,14955$ $\quad$ $A''_0 = 1,79188$
$A'_2 = -2,17834$ $\quad$ $A''_2 = -2,14906$
$A'_4 = 1,44086$ $\quad$ $A''_4 = 1,26337$
$A'_6 = -0,488471$ $\quad$ $A''_6 = -0,40226$
$A'_8 = 0,0952055$ $\quad$ $A''_8 = 0,0752613$
$A'_{10} = -0,0112687$ $\quad$ $A''_{10} = -0,00864155$
$A'_{12} = 0,00082252$ $\quad$ $A''_{12} = 0,00061569$
$A'_{14} = -3,61421 \text{ E-05}$ $\quad$ $A''_{14} = -2,65189 \text{ E-05}$
$A'_{16} = 8,76009 \text{ E-07}$ $\quad$ $A''_{16} = 6,32021 \text{ E-07}$
$A'_{18} = -8,99323 \text{ E-09}$ $\quad$ $A''_{18} = -6,39553 \text{ E-09}$

pour une addition de 1,5 dioptrie :

$A'_0 = 1,93369$ $\quad$ $A''_0 = 2,59533$
$A'_2 = -3,67534$ $\quad$ $A''_2 = -3,36181$
$A'_4 = 2,52397$ $\quad$ $A''_4 = 2,00313$
$A'_6 = -0,881948$ $\quad$ $A''_6 = -0,647982$
$A'_8 = 0,176071$ $\quad$ $A''_8 = 0,123858$
$A'_{10} = -0,021241$ $\quad$ $A''_{10} = -0,0145608$
$A'_{12} = 0,00157429$ $\quad$ $A''_{12} = 0,00106184$
$A'_{14} = -7,0039 \text{ E-05}$ $\quad$ $A''_{14} = -4,67412 \text{ E-05}$
$A'_{16} = 1,71503 \text{ E-06}$ $\quad$ $A''_{16} = 1,13627 \text{ E-06}$
$A'_{18} = -1,77574 \text{ E-08}$ $\quad$ $A''_{18} = -1,17047 \text{ E-08}$

pour une addition de 2 dioptries :

$A'_0 = 2,71988$ $\quad$ $A''_0 = 3,39246$
$A'_2 = -4,97264$ $\quad$ $A''_2 = -4,33763$
$A'_4 = 3,29933$ $\quad$ $A''_4 = 2,42641$
$A'_6 = -1,11911$ $\quad$ $A''_6 = -0,724383$
$A'_8 = 2,18396 \text{ E-01}$ $\quad$ $A''_8 = 1,27534 \text{ E-01}$
$A'_{10} = -2,58999 \text{ E-02}$ $\quad$ $A''_{10} = -1,38799 \text{ E-02}$
$A'_{12} = 1,89471 \text{ E-03}$ $\quad$ $A''_{12} = 9,43993 \text{ E-04}$
$A'_{14} = -8,34455 \text{ E-05}$ $\quad$ $A''_{14} = -3,90499 \text{ E-05}$
$A'_{16} = 2,02699 \text{ E-06}$ $\quad$ $A''_{16} = 8,98394 \text{ E-07}$
$A'_{18} = -2,0852 \text{ E-08}$ $\quad$ $A''_{18} = -8,81296 \text{ E-09}$

pour une addition de 2,5 dioptries :

$A'_0 = 3,78586$ $\quad$ $A''_0 = 4,61931$
$A'_2 = -6,68361$ $\quad$ $A''_2 = -5,52909$
$A'_4 = 4,37851$ $\quad$ $A''_4 = 2,85006$
$A'_6 = -1,47553$ $\quad$ $A''_6 = -7,89562 \text{ E-01}$
$A'_8 = 2,86712 \text{ E-01}$ $\quad$ $A''_8 = 1,29997 \text{ E-01}$
$A'_{10} = -3,38913 \text{ E-02}$ $\quad$ $A''_{10} = -1,33166 \text{ E-02}$
$A'_{12} = 2,47294 \text{ E-03}$ $\quad$ $A''_{12} = 8,5695 \text{ E-04}$
$A'_{14} = -1,08683 \text{ E-04}$ $\quad$ $A''_{14} = -3,36869 \text{ E-05}$
$A'_{16} = 2,63544 \text{ E-06}$ $\quad$ $A''_{16} = 7,39168 \text{ E-07}$
$A'_{18} = -2,70717 \text{ E-08}$ $\quad$ $A''_{18} = -6,93743 \text{ E-09}$

pour une addition de 3 dioptries :

$A'_0 = 4,19136$ $\quad$ $A''_0 = 5,0023$
$A'_2 = -6,02347$ $\quad$ $A''_2 = -4,68276$
$A'_4 = 3,41786$ $\quad$ $A''_4 = 1,78942$
$A'_6 = -1,03877$ $\quad$ $A''_6 = -3,4488 \text{ E-01}$

$A'_8 = 1,8748 \text{ E-01}$      $A''_8 = 3,48989 \text{ E-02}$

$A'_{10} = -2,10043 \text{ E-02}$      $A''_{10} = -1,54767 \text{ E-03}$

$A'_{12} = 1,47276 \text{ E-03}$      $A''_{12} = -2,11172 \text{ E-05}$

$A'_{14} = -6,27956 \text{ E-05}$      $A''_{14} = 5,29538 \text{ E-06}$

$A'_{16} = 1,48733 \text{ E-06}$      $A''_{16} = -2,09482 \text{ E-07}$

$A'_{18} = -1,4996 \text{ E-08}$      $A''_{18} = 2,80655 \text{ E-09}$

7. Lentille selon la revendication 3 et la revendication 6, caractérisée en ce que les coefficients $A_{2i}$ ont les valeurs suivantes :

pour une addition de 1 dioptrie :

$A_0 = 1,3988$
$A_2 = -2,16002$
$A4 = 1,33772$
$A_6 = -0,432789$
$A_8 = 0,0815423$
$A_{10} = -0,00941029$
$A_{12} = 6,73638 \text{ E-04}$
$A_{14} = -2,91496 \text{ E-05}$
$A_{16} = 6,97847 \text{ E-07}$
$A_{18} = -7,09193 \text{ E-09}$

pour une addition de 1,5 dioptrie :

$A_0 = 2,23308$
$A_2 = -3,5289$
$A_4 = 2,21463$
$A_6 = -0,724956$
$A_8 = 0,138094$
$A_{10} = -0,0160961$
$A_{12} = 1,1625 \text{ E-03}$
$A_{14} = -5,06976 \text{ E-05}$
$A_{16} = 1,22204 \text{ E-06}$
$A_{18} = -1,24938 \text{ E-08}$

pour une addition de 2 dioptries :

$A_0 = 3,09333$
$A_2 = -4,75114$
$A_4 = 2,91364$
$A_6 = -0,937834$
$A_8 = 0,17649$
$A_{10} = -0,0203899$
$A_{12} = 1,46289 \text{ E-03}$
$A_{14} = -6,34757 \text{ E-05}$
$A_{16} = 1,52401 \text{ E-06}$
$A_{18} = -1,55319 \text{ E-08}$

pour une addition de 2,5 dioptries :

$A_0 = 4,10909$
$A_2 = -5,95027$
$A_4 = 3,46877$
$A_6 = -1,07452$
$A_8 = 0,196608$
$A_{10} = -0,02225$
$A_{12} = 1,57197 \text{ E-03}$

14

$A_{14} = -6,74164 \text{ E-05}$

$A_{16} = 1,60406 \text{ E-06}$

$A_{18} = -1,62318 \text{ E-08}$

pour une addition de 3 dioptries :

$A_0 = 4,60564$

$A_2 = -5,23524$

$A_4 = 2,45824$

$A_6 = -0,630152$

$A_8 = 0,0978757$

$A_{10} = -0,00961613$

$A_{12} = 6,01202 \text{ E-04}$

$A_{14} = -2,31856 \text{ E-05}$

$A_{16} = 5,0277 \text{ E-07}$

$A_{18} = -4,68902 \text{ E-09}$

8.  Lentille selon la revendication 2, caractérisée en ce que les coefficients $A'_{2i}$ et $A''_{2i}$ ont les valeurs suivantes :

pour une addition de 1 dioptrie :

| | |
|---|---|
| $A'_0 = 1,07286$ | $A''_0 = 1,67495$ |
| $A'_2 = 0,320699$ | $A''_2 = -0,186507$ |
| $A'_4 = -0,657171$ | $A''_4 = -0,260694$ |
| $A'_6 = 0,255218$ | $A''_6 = 0,109511$ |
| $A'_8 = -0,0490516$ | $A''_8 = -0,0201114$ |
| $A'_{10} = 0,0054899$ | $A''_{10} = 0,00210789$ |
| $A'_{12} = -3,74632 \text{ E-04}$ | $A''_{12} = -1,3458 \text{ E-04}$ |
| $A'_{14} = 1,53798 \text{ E-05}$ | $A''_{14} = 5,1918 \text{ E-06}$ |
| $A'_{16} = -3,49417 \text{ E-07}$ | $A''_{16} = -1,11489 \text{ E-07}$ |
| $A'_{18} = 3,37795 \text{ E-09}$ | $A''_{18} = 1,02479 \text{ E-09}$ |

pour une addition de 1,5 dioptrie :

| | |
|---|---|
| $A'_0 = 1,52699$ | $A''_0 = 2,04694$ |
| $A'_2 = -0,361839$ | $A''_2 = 0,00504386$ |
| $A'_4 = -0,526959$ | $A''_4 = -0,72156$ |
| $A'_6 = 0,311383$ | $A''_6 = 0,332037$ |
| $A'_8 = -0,0753019$ | $A''_8 = -0,0712913$ |
| $A'_{10} = 0,00997776$ | $A''_{10} = 0,00875106$ |
| $A'_{12} = -7,79578 \text{ E-04}$ | $A''_{12} = -6,47787 \text{ E-04}$ |
| $A'_{14} = 3,58257 \text{ E-05}$ | $A''_{14} = 2,85999 \text{ E-05}$ |
| $A'_{16} = -8,96048 \text{ E-07}$ | $A''_{16} = -6,93668 \text{ E-07}$ |
| $A'_{18} = 9,41343 \text{ E-09}$ | $A''_{18} = 7,11314 \text{ E-09}$ |

pour une addition de 2 dioptries :

| | |
|---|---|
| $A'_0 = 2,0372$ | $A''_0 = 2,51543$ |
| $A'_2 = -0,773797$ | $A''_2 = -0,0956491$ |
| $A'_4 = -0,35122$ | $A''_4 = -0,814048$ |
| $A'_6 = 0,260538$ | $A''_6 = 0,391545$ |
| $A'_8 = -0,0654291$ | $A''_8 = -0,0867876$ |
| $A'_{10} = 0,00874569$ | $A''_{10} = 0,0109575$ |
| $A'_{12} = -6,83569 \text{ E-04}$ | $A''_{12} = -8,31697 \text{ E-04}$ |
| $A'_{14} = 3,1335 \text{ E-05}$ | $A''_{14} = 3,7539 \text{ E-05}$ |
| $A'_{16} = -7,81015 \text{ E-07}$ | $A''_{16} = -9,28232 \text{ E-07}$ |
| $A'_{18} = 8,17476 \text{ E-09}$ | $A''_{18} = 9,68034 \text{ E-09}$ |

pour une addition de 2,5 dioptries :

$A'_0 = 2,49526$      $A''_0 = 2,99351$

$A'_2 = -0,982385$      $A''_2 = -0,486412$

$A'_4 = -0,229961$      $A''_4 = -0,488394$

$A'_6 = 0,201655$      $A''_6 = 0,244189$

$A'_8 = -0,0503787$      $A''_8 = -0,0520116$

$A'_{10} = 6,62155 E-03$      $A''_{10} = 6,29987 E-03$

$A'_{12} = -5,0929 E-04$      $A''_{12} = -4,6243 E-04$

$A'_{14} = 2,30313 E-05$      $A''_{14} = 2,03523 E-05$

$A'_{16} = -5,67689 E-07$      $A''_{16} = -4,9403 E-07$

$A'_{18} = 5,88796 E-09$      $A''_{18} = 5,08339 E-09$

pour une addition de 3 dioptries :

$A'_0 = 3,20898$      $A''_0 = 3,74531$

$A'_2 = -1,11419$      $A''_2 = -0,699573$

$A'_4 = -0,36958$      $A''_4 = -0,525259$

$A'_6 = 0,268856$      $A''_6 = 0,269972$

$A'_8 = -0,0635023$      $A''_8 = -0,0572078$

$A'_{10} = 8,02594 E-03$      $A''_{10} = 6,86483 E-03$

$A'_{12} = -5,97885 E-04$      $A''_{12} = -4,99263 E-04$

$A'_{14} = 2,631 E-05$      $A''_{14} = 2,17955 E-05$

$A'_{16} = -6,33313 E-07$      $A''_{16} = -5,2544 E-07$

$A'_{18} = 6,43355 E-09$      $A''_{18} = 5,37576 E-09$

9. Lentille selon la revendication 3 et la revendication 8, caractérisée en ce que les coefficients $A_{2i}$ ont les valeurs suivantes :

pour une addition de 1 dioptrie :

$A_0 = 1,25812$

$A_2 = 0,276651$

$A_4 = -0,58639$

$A_6 = 0,215821$

$A_8 = -0,0389064$

$A_{10} = 4,06343 E-03$

$A_{12} = -2,57889 E-04$

$A_{14} = 9,82156 E-06$

$A_{16} = -2,06571 E-07$

$A_{18} = 1,84521 E-09$

pour une addition de 1,5 dioptrie :

$A_0 = 1,75922$

$A_2 = -0,13939$

$A_4 = -0,598726$

$A_6 = 0,295587$

$A_8 = -0,0653998$

$A_{10} = 8,16835 E-03$

$A_{12} = -6,11438 E-04$

$A_{14} = 2,72016 E-05$

$A_{16} = -6,63346 E-07$

$A_{18} = 6,82951 E-09$

pour une addition de 2 dioptries :

$A_0 = 2,27582$

$A_2 = -0,311495$

$A_4 = -0,747841$

$A_6 = 0,398884$

$A_8 = -0,0920375$

$A_{10} = 0,0118385$

$A_{12} = -9,05966\ E\text{-}04$

$A_{14} = 4,10027\ E\text{-}05$

$A_{16} = -1,01365\ E\text{-}06$

$A_{18} = 1,0552\ E\text{-}08$

pour une addition de 2,5 dioptries :

$A_0 = 2,75097$

$A_2 = -0,470951$

$A_4 = -0632494$

$A_6 = 0,332472$

$A_8 = -0,0741809$

$A_{10} = 9,2779\ E\text{-}03$

$A_{12} = -6,94985\ E\text{-}04$

$A_{14} = 3,09539\ E\text{-}05$

$A_{16} = -7,56087\ E\text{-}07$

$A_{18} = 7,79979\ E\text{-}09$

pour une addition de 3 dioptries :

$A_0 = 3,4754$

$A_2 = -0,952351$

$A_4 = -0,349482$

$A_6 = 0,205687$

$A_8 = -0,042057$

$A_{10} = 4,66255\ E\text{-}03$

$A_{12} = -3,07085\ E\text{-}04$

$A_{14} = 1,20246\ E\text{-}05$

$A_{16} = -2,59016\ E\text{-}07$

$A_{18} = 2,36646\ E\text{-}09$

**10.** Lentille selon la revendication 1, caractérisée en ce que la fonction d'évolution entre la vision de près et la vision de loin, f, est de forme discontinue avec au moins deux segments en fonction de h :

$$f(P_{VL}, Add, h) = P_{VL} + Add \text{ pour } h \leq R$$

$$\text{et } f(P_{VL}, Add, h) = P_{VL} \text{ pour } h > R$$

où R est un rayon de zone interne de la lentille, fonction de l'addition.

**11.** Lentille selon la revendication 10, caractérisée en ce que le rayon R a sensiblement les valeurs suivantes en fonction de l'addition (Add) exprimée en dioptries :

pour Add = 0,5      $R = 1,39 \pm 0,15$

pour Add = 0,75     $R = 1,35 \pm 0,15$

pour Add = 1         $R = 1,32 \pm 0,15$

pour Add = 1,25     $R = 1,29 \pm 0,15$

pour Add = 1,5       $R = 1,27 \pm 0,15$

pour Add = 1,75     $R = 1,245 \pm 0,15$

pour Add = 2         $R = 1,225 \pm 0,15$

pour Add = 2,25     $R = 1,2 \pm 0,15$

pour Add = 2,5       $R = 1,17 \pm 0,15$

pour Add = 2,75     $R = 1,12 \pm 0,15$

pour Add = 3    R = 1, 06 ± 0,15

et pour les autres valeurs de l'addition (Add), le rayon R est obtenu par interpolation ou extrapolation.

12. Lentille selon l'une quelconque des revendications 1 à 11, caractérisée en ce que le coefficient C est compris dans une zone définie par les courbes inférieure et supérieure suivantes:

$$Cmin(Add, P_{VL}) = - 0,098 \, Add + 0,02 \, P_{VL} -0,15$$

$$Cmax(Add, P_{VL}) = -0,0047 \, Add + 0,02 \, P_{VL} -0,0065$$

avec $P_{VL}$ compris entre -20 et +20 dioptries, et Add entre 0,50 et 4 dioptries.

13. Lentille selon l'une quelconque des revendications 1 à 12, caractérisée en ce que le coefficient C est défini sensiblement par l'équation suivante :

$$C(Add, P_{VL}) = - 0,051 \, Add + 0,02 \, P_{VL} -0,077$$

14. Lentille selon l'une quelconque des revendications 1 à 13, caractérisée en ce que le coefficient de correction de puissance (B) s'exprime en fonction du coefficient de correction d'aberration sphérique (C) sensiblement selon la formule suivante :
Quand C ≠ 0,

$$B(Add, P_{VL}) = -0,46 \cdot \frac{C(Add, P_{VL})}{\left| C(Add, P_{VL}) \right|} \left[ 1-exp(-13,1. \left| C(Add, P_{VL}) \right| ) \right]$$

Quand C = 0, $B(Add, P_{VL}) = 0$.

FIG.1

FIG.2

$(A_{DD} = 2D)$

## FIG. 3

## FIG. 4

ADD 1.0D

FIG. 5

*FIG. 6*

FIG. 7

ADD 2.5D

Pvl 0.0D

Pvl -5.0D

*FIG. 8*

FIG. 9

**Office européen des brevets**

## RAPPORT DE RECHERCHE EUROPEENNE

Numéro de la demande

EP 98 40 3139

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 381 567 A (ESSILOR INTERNATIONAL) 8 août 1990 * revendication 1 * | 1 | G02C7/04 |
| D,A | FR 2 737 312 A (ESSILOR INT) 31 janvier 1997 * revendication 1 * | 1 | |
| D,A | WO 94 23327 A (PILKINGTON BARNES HIND INC ;PERROTT COLIN M (US)) 13 octobre 1994 * le document en entier * | 1 | |

**DOMAINES TECHNIQUES RECHERCHES (Int.Cl.6)**

G02C
G02B

Le présent rapport a été établi pour toutes les revendications

| Lieu de la recherche | Date d'achèvement de la recherche | Examinateur |
|---|---|---|
| LA HAYE | 8 avril 1999 | Sarneel, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 3139

08-04-1999

| Document brevet cité au rapport de recherche | | Date de publication | Membre(s) de la famille de brevet(s) | | Date de publication |
|---|---|---|---|---|---|
| EP 381567 | A | 08-08-1990 | FR | 2642854 A | 10-08-1990 |
| | | | CA | 2008047 A,C | 03-08-1990 |
| | | | DE | 69003550 D | 04-11-1993 |
| | | | DE | 69003550 T | 10-03-1994 |
| | | | JP | 2240625 A | 25-09-1990 |
| | | | US | 4976534 A | 11-12-1990 |
| FR 2737312 | A | 31-01-1997 | US | 5699141 A | 16-12-1997 |
| WO 9423327 | A | 13-10-1994 | AU | 6490094 A | 24-10-1994 |
| | | | CA | 2153492 A | 13-10-1994 |
| | | | EP | 0690997 A | 10-01-1996 |
| | | | JP | 8508588 T | 10-09-1996 |
| | | | US | 5771088 A | 23-06-1998 |